# EUROPEAN PATENT SPECIFICATION

(11) **EP 1 610 044 B1**
(45) Date of publication and mention of the grant of the patent: **22.04.2009**
(21) Application number: 05105494.8
(22) Date of filing: 21.06.2005
(51) Int. Cl.: F16K 7/16

(54) **A fluid cutoff device**
Absperrventil für Flüssigkeit
Soupape d'arrêt pour le fluide

(30) Priority: 25.06.2004 IT BS20040074
(43) Date of publication of application: 28.12.2005
(73) Proprietor: Ratti Giampietro e C. S.n.c., 20038 Seregno (Milano) (IT)
(72) Inventor: Ratti, Walter, 20038 Seregno (Milano) (IT)
(74) Representative: Crippa, Paolo Ernesto

(56) References cited:
- EP-A- 0 609 469
- FR-A- 932 504
- FR-A- 1 406 016
- US-A- 4 014 514

## Description

The object of the present invention is a fluid cutoff device, in particular a diaphragm valve, in particular for pharmaceutical use.

Document FR-A-1 406 016 shows a device having wall the features of the pre-characterising portion of the annexed claim 1.

In various fields of application of the art, such as biotechnologies, the semiconductors industry, food, medical and pharmaceutical processing, devices allowing a clean and sterile handling are required. Moreover, the device cleaning must be easy, by providing for a minimisation of dead volumes and of fluid stagnation areas. The presence of such requirements, in particular for fluid cutoff devices, is therefore important.

As known in the prior art, fluid cutoff devices can comprise a flexible diaphragm allowing a valves to switch from a configuration wherein a fluid flow is enabled to a configuration wherein such flow is prevented.

For example, a solution comprising a membrane valve is described in document US-B1-6427967.

However, solutions like that described above, exhibit a non-optimum fluid drainage or a stagnation of residual fluid when the feeding of the latter is interrupted.

The object of the present invention is to provide a fluid cutoff device which should guarantee optimum drainage of the fluid itself.

Such object is achieved by a device obtained according to claim 1. The dependent claims describe embodiment variants.

The features and advantages of the present invention will appear more clearly from the following description of a preferred embodiment, made by way of an indicative non-limiting example with reference to the annexed drawings, wherein:
- - figure 1 shows a vertical section view of the device according to the present invention as a whole;
- figure 1a shows a perspective view of a detail of the device according to the present invention;
- figure 2 shows the enlarged detail II of figure 1;
- figure 3 shows a top view of a valve body of the device of figure 1;
- figure 4 shows a section view of the valve body according to line IV-IV of figure 3;
- figure 5 shows a top view of the diaphragm;
- figure 6 shows a section view according to line VI-VI of figure 5.

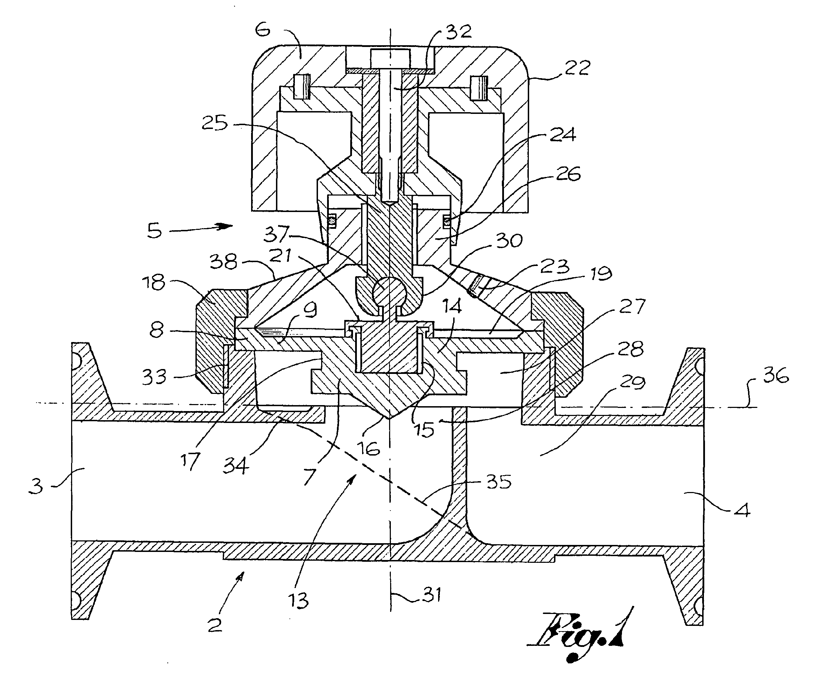

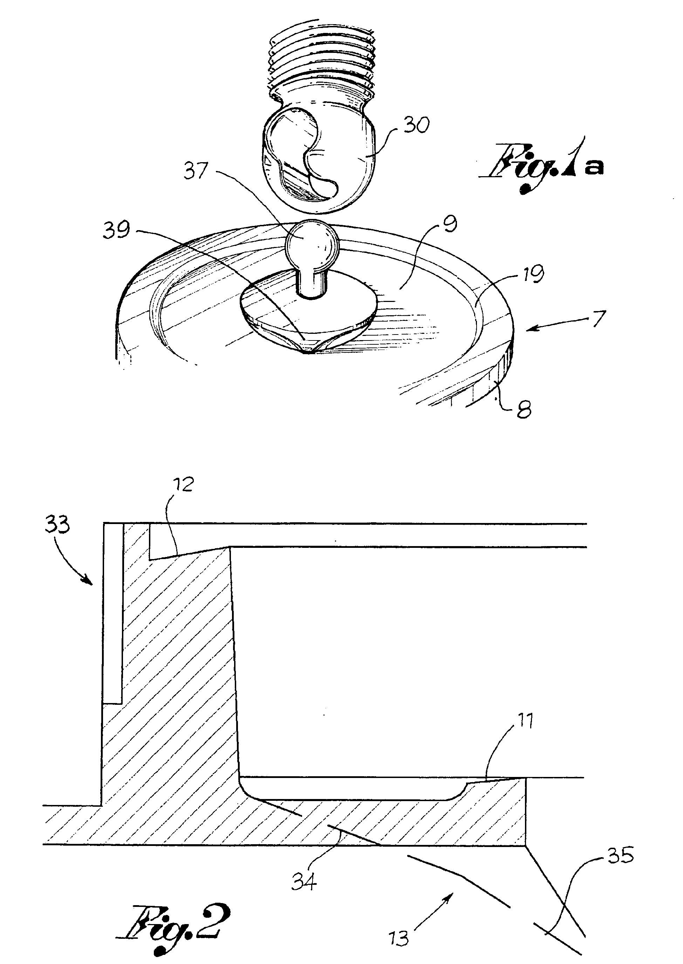

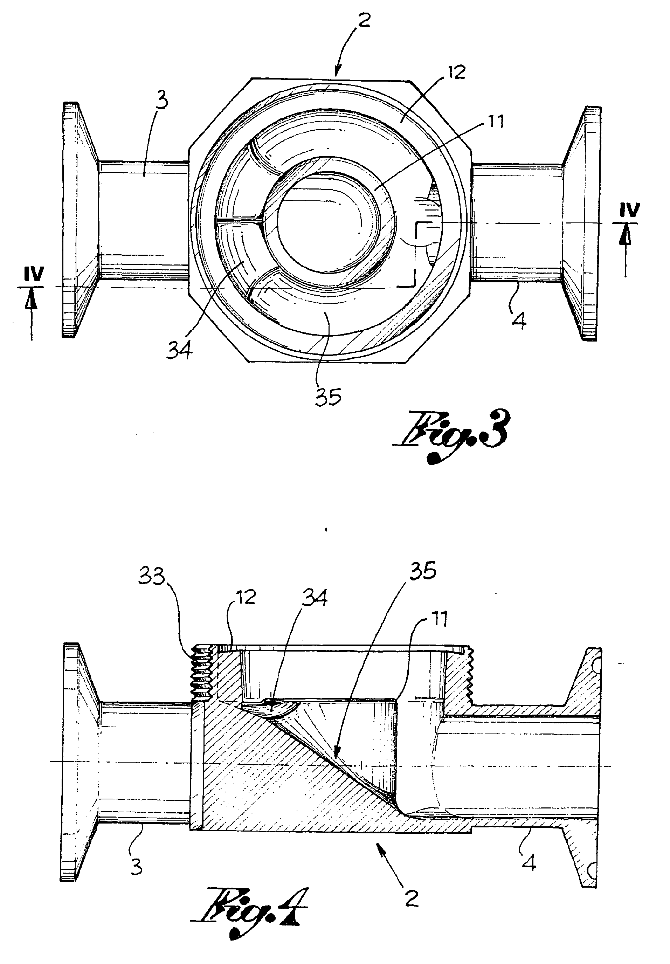

With reference to the annexed figures, and as regards a possible embodiment, reference numeral 1 denotes a fluid cutoff device. In the embodiment described and illustrated herein, with reference to figures 1 to 4, device 1 comprises at least one inlet duct 3 suitable for the flow of an incoming fluid and at least one outlet duct 4, in fluid connection with said inlet duct 3, suitable for conveying said fluid in output.

In a preferred embodiment, an end of said inlet duct 3 comprises a suitably shaped dynamic sealing surface 11.

In a further embodiment, the dynamic sealing surface 11 is flared, or also said inversed conical, as explained in detail hereinafter.

Said inlet duct 3 and said outlet duct 4 define the outline of a valve cavity 27.

In a preferred embodiment, a portion of said valve cavity 27 defines a "cup" surface.

Favourably said "cup" surface comprises an end comprising a suitably shaped static sealing surface 12, for example with annular structure.

In a further embodiment, the static sealing surface 12 is flared, or also said inversed conical, as explained in detail hereinafter.

Preferably, said "cup" surface comprises an externally threaded surface portion 33.

At least one inlet duct 3 substantially of tubular shape faces into said valve cavity 27 through an inlet port 28.

Moreover, at least one outlet duct 4 substantially of tubular shape branches from the valve cavity 27 through an outlet port 29.

In a preferred embodiment, said inlet duct 3 is in fluid connection with said outlet duct 4, suitable for conveying said outlet fluid.

In a preferred embodiment, said inlet duct 3 takes an "elbow" structure.

In a preferred embodiment, the axis of the inlet duct 3 and the axis of the outlet duct 4 form an angle of 180° with one another (also called "180° configuration").

In a further embodiment, the axis of the inlet duct 3 and the axis of the outlet duct 4 form an angle of 90° with one another (also called "90° configuration").

By way of a non-limiting example, in the description herein, unless otherwise indicated, reference is made to a device 1 with a "180° configuration".

Preferably, in an open valve configuration, as described in detail hereinafter, the direction and sense of the fluid flow are defined by a flow line that covers a trajectory which, starting from an end of the inlet duct 3, enters into the valve cavity 27 through the inlet port 28, comes out of said valve cavity 27 through the outlet port 29 transferring into the outlet duct 4.

Moreover, said flow line is delimited at least in a portion thereof by a chamfered, rounded and smooth surface that physically and uninterruptedly connects said inlet duct 3 and said outlet duct 4.

In particular, a portion of said chamfered, rounded and smooth surface comprised between said inlet port 28 and said outlet port 29 allows the fluid connection between said inlet duct 3 and said outlet duct 4.

Said surface portion is shaped not in parallel relative to a membrane plane 36, as defined in detail hereinafter.

In a preferred embodiment, said surface portion comprises a structure configured like a chute structure 13, such chute structure 13 being for example symmetrical relative to axis 31.

In a preferred embodiment, chute 13 comprises at least one surface with a slope suitable, in relation to the direction and sense of the fluid flow as defined above, for conveying the fluid towards the outlet port 28.

In a preferred embodiment, said chute 13 comprises surfaces with different slope wherein the passage from one surface to the other is, for example, chamfered and uninterrupted.

According to a further embodiment, said chute 13 is obtained by two portions of surfaces with a different slope, for example a leading chute portion 34 and a trailing chute portion 35 wherein the passage from one surface to the other is for example chamfered and uninterrupted.

Favourably, the slope of the leading chute portion 34 is smaller than the slope of the trailing chute portion 35, in relation to the direction and sense of the fluid flow as defined above.

Moreover, the trailing chute portion 35 is substantially steeper than the leading chute portion 34.

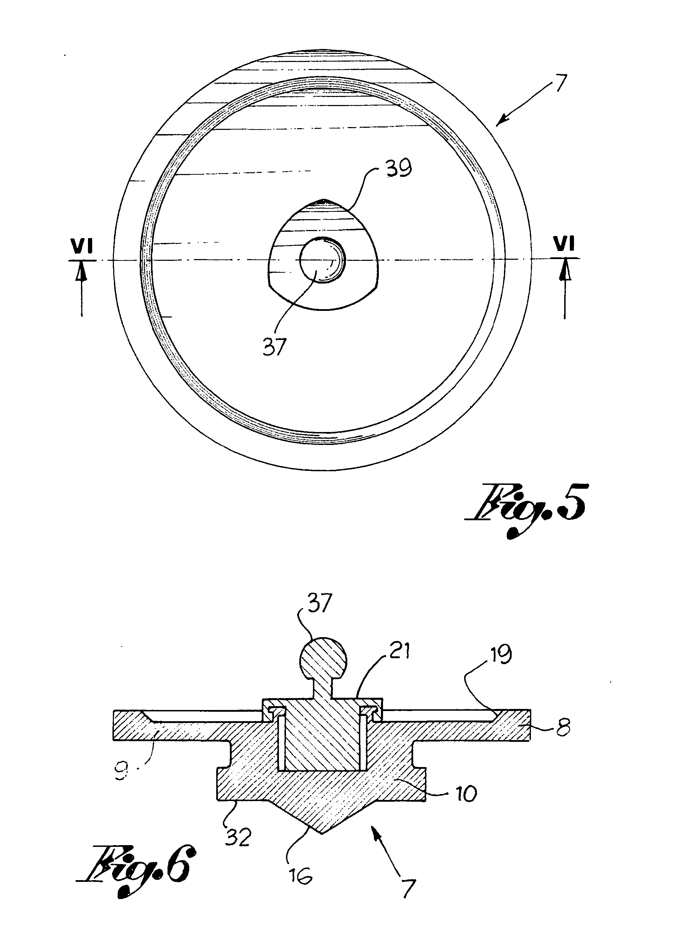

With reference to figures 1, 5, 6, there is shown a diaphragm 7, having for example a substantially discoid shape.

Favourably, diaphragm 7 is seated in the valve cavity 27.

According to a preferred embodiment, diaphragm 7 comprises a central hub 14, wherein there is obtained a substantially cylindrical threaded cavity 15.

In said cavity 15 there is inserted a substantially cylindrical coupling 21 comprising an outer threaded surface, for example with a 1 mm pitch, said coupling being screwed into said cavity 15.

Preferably, coupling 21 comprises a portion comprising a shaped end 37 (fig. 1a), for example of spheroidal shape, suitable for geometrically coupling with a support structure 30 provided at the end of a stem 25, said support structure 30 being hollow and favourably geometrically complementary to said shaped end 37.

Preferably, the portion of coupling 21 comprising said shaped end 37 emerges from said cavity 15 and is encapsulated by the grip of a semi-triangular profile 39 of said coupling 21, for example obtained by pressing on three spots, to prevent disconnection or unscrewing of coupling 21 from cavity 15.

Said diaphragm 7 further comprises a peripheral outer region or rim 8 of annular structure radially and uninterruptedly connected to hub 14 by a membrane 9.

Rim 8 contacts the static sealing surface 12.

Rim 8 is held in position by an annular element 18 provided with inner threading, for example with a fine pitch thread, screwed to said outer threaded surface portion 33 of said cup surface.

According to a preferred embodiment, rim 8 has an increased thickness that comprises a projection or rise 19 at the periphery of diaphragm 7.

Diaphragm 7 is preferably symmetrical relative to axis 31, which axis 31 in a further embodiment coincides with the axis of stem 25 comprised in actuator 5.

Preferably, hub 14 extends from a central portion of diaphragm 7.

Favourably, an end of said hub 14 comprises a a shutter 10.

In a preferred embodiment, said shutter 10 comprises a fluid-dynamic profile, for example a conical profile 16, said conical profile 16 being circumscribed by an annular sealing surface 32.

Moreover, shutter 10 is radially unloaded by undercuts 17 at shutter 10, for increasing the length of the bending side of diaphragm 7.

In a preferred embodiment variant, the surface of diaphragm 7 in contact with the fluid flow comprises a surface finish that rounds and chamfers any edges and undercuts present.

According to a preferred embodiment, a valve body 2 comprises at least said inlet duct 3 and said outlet duct 4.

The cutoff device 1 comprises at least the valve body 2 and at least one actuator 5.

In a preferred embodiment, the valve body 2 comprises a threaded portion 33 along the exterior of the "cup" surface.

Actuator 5 comprises actuation means suitable for influencing diaphragm 7 enabling a passage from a configuration wherein diaphragm 7 enables the flow of said fluid to a configuration wherein said flow is prevented.

For example, said actuation means comprise a stem 25 and a screw 32 or valve stud.

According to a preferred embodiment, said stem 25 comprises screw 32.

Stem 25 axially translates inside a housing 26 for influencing a diaphragm 7 outside the valve body 2.

Preferably, said housing 26 comprises a valve lid 38.

Favourably, housing 26 and valve body 2 are integrally connected by the threaded annular element 18 screwed to the threaded surface 33.

Favourably, housing 26 is geometrically coupled to a knob 6 suitable for rotating integrally with screw 32 and stem 25.

Moreover, the knob is handled by a grip 22.

In a preferred embodiment, an O-ring 24 is arranged between knob 6 and the valve lid.

Moreover, the valve lid comprises a signalling through hole 23.

In the normal operation, a fluid flow coming for example from a system not shown in the figure, flows through the inlet duct 3 and faces the inlet port 28.

Diaphragm 7 rests on the static sealing surface 12 through rim 8.

The static sealing surface 12 is defined by the fact that, in any configuration of the cutoff device 1, said static sealing surface 12 realises the sealing in contact with rim 8 of diaphragm 7, preventing the fluid from leaking from the valve cavity 27.

In a configuration defined as "open configuration", said diaphragm 7 is held by stem 25 in a position that allows the fluid flow from the inlet port 28 to the valve cavity 27, said position being the "open valve position".

In such position, the fluid therefore flows through the valve cavity 27 flowing along chute 13 and reaching the outlet port 27 and through said outlet port 27.

In a further embodiment variant, knob 6 is operated for example by a grip 22, for example by an external operator.

In a preferred embodiment, if there is the need of stopping the flow through the outlet duct 4, the actuation means are influenced by providing a torque to knob 6 by grip 22 and for example screw 32 is turned and stem 25 is axially actuated.

Favourably, an external operator manually provides a torque to knob 6 by grip 2.

Said torque is mechanically transmitted to screw 32 and by said screw 32 transformed into axial force applied to stem 25, which exerts a pressure on said diaphragm 7 proportion to the torque applied.

As a consequence, diaphragm 7, in particular rim 8, exerts a pressure on the static sealing surface 12 which is inversely proportional to the contact surface between diaphragm 7 and the static sealing surface 12.

Moreover, diaphragm 7, in particular shutter 10, has such dimensions as to exert a pressure on the dynamic sealing surface 11 which is inversely proportional to the contact surface between diaphragm 7 and the dynamic sealing surface 11.

Substantially, stem 25 axially translates and influences diaphragm 7 allowing the passage from the "open configuration" to a "closed configuration" defined by the fact that the fluid flow through the inlet port 28 is prevented.

Diaphragm 7 is suitable, in a "closed configuration", to prevent the fluid flow from said inlet duct 3 to said outlet duct 4, abutting on a dynamic sealing surface 11 of the inlet duct 3 that defines a membrane plane 36. Diaphragm 7 is in a position defined as "closed valve position".

The dynamic sealing surface 11 is defined by the fact that said dynamic sealing surface 11 realises the closure of the inlet duct 3 in contact with diaphragm 7 only in the "closed configuration" or, in other words, when diaphragm 7 is in contact with pressure with said dynamic sealing surface 11 or diaphragm 7 is in contact with a line of said dynamic sealing surface 11, for example the outline.

In a "closed configuration", the fluid present on the dynamic sealing surface 11 easily drains towards chute 13 and thereby towards the outlet duct 4 using the non-parallel shaping relative to the membrane plane 36 of the dynamic sealing surface 11.

In a particular embodiment, the fluid drains towards chute 13 along the flared dynamic sealing surface 11 also called inversed conical.

In a "closed configuration" of the fluid cutoff device 1, the seal of diaphragm 7 in contact with the dynamic sealing surface 11 is optimised by the fact that the dynamic sealing surface 11 is shaped not parallel relative to the membrane plane 36, for example it is flared or also called inversed conical.

Moreover, if for any reason during the operation, for example in case of system wash, the fluid flow entering the inlet duct 3 is interrupted, any fluid present on the dynamic sealing surface 11 drains towards the outlet duct 4 using the flared dynamic sealing surface 11 also called inversed conical.

In any configuration of the fluid cutoff device 1, the seal of rim 8 in contact with the static sealing surface 12 is optimised by the fact that the static sealing surface 12 is shaped not parallel relative to the membrane plane 36, for example it is flared or also called inversed conical.

According to a preferred embodiment, favourably said chute 13 allows an easy drainage of the fluid during the various operating steps of the valve and in the different physical arrangements of the valve, for example also in a horizontal arrangement, giving the valve a high auto-drainage capacity.

Advantageously, the leading chute portion 34 is less steep and allows not reducing the thickness of the inlet duct 3 excessively.

In a preferred embodiment, the part is manufactured by tool processing of the solid, and an excessive slope of the leading chute portion 34 causes an excessive reduction of the thickness of the inlet duct 3.

Advantageously, said valve body 2 is made of a metal material, for example AISI 316L steel.

Preferably, the inner surfaces of said valve body are made with a finish degree of 0.6 - 0.4 Ra.

Advantageously, a finish degree of 0.2 Ra is obtained by polishing.

Advantageously, shutter 10 is radially unloaded by undercuts 17 at shutter 10 for improving the flexibility and thus reducing the strains present in diaphragm 7 during the valve opening and closing movements.

Advantageously, the conical profile 16 of diaphragm 7 allows optimum modulation of the fluid flow during the standard use.

Advantageously, the surface of diaphragm 7 in contact with the fluid flow in open configuration of the valve comprises a surface finish so as to round and chamfer any edges and undercuts present and allow minimising any dead volumes and fluid stagnation areas.

In the case of a device 1 characterised by a "90° configuration" as described above, advantageously said diaphragm 7 can take an elongated geometry in the direction of the axis of stem 25, to easily reach the dynamic sealing surface 11 where the valve closing is obtained.

Advantageously, coupling 21 comprises a portion comprising a suitably shaped end 37, for example of spheroidal shape, suitable for geometrically coupling with a support structure 30 comprised at the end of a stem 25 and a'dvantageously ease and speed up the operation for replacing diaphragm 7 by a quick release (fig. 1a).

Advantageously membrane 9, rim 8 shutter 10 and hub 14 are made of a polymeric material, for example PTFE.

Moreover, coupling 21 is made of a metal material, for example AISI 316L steel.

Advantageously, from the operative point of view in conventional sterilisation procedures and cycles, for example of pharmaceutical use, said diaphragm 7 is an integral part, for example comprising materials such as PTFE and AISI 316L steel, which can be advantageously subject to sterilisation cycles without undergoing thermal stresses harmful for the structure of diaphragm 7 itself. This allows obtaining a fluid cutoff device 1 which is suitable for working at high pressures while exhibiting a long operating life.

Surprisingly, by said flared dynamic sealing surface 11, an easy drainage of the fluid is obtained not just in standard use conditions, for example use with open valve or with closed valve, for example limiting the fluid build up under shutter 10 during the closure in the horizontal use, but also in fluid flow stop conditions.

Actually, such a case can occur in case of discontinuous supply, or if the system is washed; in these situations, a flared or inversed conical dynamic sealing surface 11 favours the fluid drainage an prevents a short circuit of process fluid, which of course is harmful in case of toxic fluids or comprising pathogenic agents, effectively facilitating the fluid drainage through the outlet duct 4.

Unusually, moreover, said flared dynamic surface 11 allows an effective and optimum compression of diaphragm 7 in a "closed configuration" and in particular of shutter 10, reducing the surface subject to the axial force applied by actuator 5, the applied force being equal. Said optimum compression allows a full cutoff of the fluid by device 1 without leaks in case of closed configuration of the valve.

Advantageously, moreover, said static sealing surface 12 is shaped not in parallel relative to said membrane plane 36.

Advantageously, said static sealing surface 12 is flared, also called inversed conical.

Thanks to its increased thickness, projection 19 is suitable for allowing an effective compression of diaphragm 7 without impairing the seal and avoiding radial sliding of diaphragm 7 during the valve opening and closing movements which could allow a fluid leaking from cavity 15 tangentially to the static sealing surface 12.

Advantageously, said flared static sealing surface 12 in contact with rim 8 and in particular with projection 19 allows an effective and optimum compression of diaphragm 7 and in particular of rim 8 reducing the surface subject to the axial force applied by the actuator, the applied force being equal.

Advantageously, said effective and optimum compression is even along the round angle of rim 8 itself, thanks to the threaded annular element 18 screwed to the threaded surface 33 comprised in the valve body 2. Said effective and optimum compression prevents radial translations of diaphragm 7 and concurrent harmful fluid leaks.

Advantageously, the effective compression of diaphragm 7 and in particular of rim 8 allows obtaining the seal and the physical separation of mechanical elements, such as the actuation means, from the process fluid.

Advantageously grip 22 is made of AISI 316L steel if cold fluids are used, or of a lower heat conduction material, such as PTFE, for hot fluids.

Advantageously an O-ring 24 is arranged between knob 6 and the valve lid and allows braking the rotation of knob 6 to prevent accidental rotations of the same, for example in case of vibrations and strains from the system.

Advantageously, the valve lid 38 comprises a signalling through hole 23 that allows easily signalling the integrity of diaphragm 7.

Advantageously, said signalling occurs by fluid leaking.

A fluid cutoff device 1 according to the present invention can be actuated in any manner by the designer, for example by electro-mechanical, electro-hydraulic, electro-pneumatic, manual actuation.

For this reason, the details of actuator 5 are not further described herein.

According to a particular embodiment, the actuation stem 25 comprises a support structure 30 at an end thereof for diaphragm 7.

For the objects of the present invention, it is sufficient to understand that following an external action, for example of an operator that manually imparts a torque to knob 6, stem 25 of actuator 5 axially translates (for example vertically in figure 1) so as to press diaphragm 7 in contact with the dynamic sealing surface 11.

## Claims

1. A fluid cutoff device (1) comprising a valve body (2), wherein said valve body (2) comprises:
- at least one inlet duct (3) suitable for the flow of an incoming fluid;
- at least one outlet duct (4), in fluid connection with said inlet duct (3), suitable for conveying said outlet fluid;
- at least one intermediate position suitable for realising said fluid connection;
- a diaphragm (7) seated into said valve body (2) suitable for preventing, in a closed configuration, the fluid flow from said inlet duct (3) to said outlet duct (4), abutting on a dynamic sealing surface 11 of the inlet duct (3) by a contact portion thereof that defines a membrane plane (36);
wherein at least one inner portion of said device, suitable for realising said fluid connection between inlet duct (3) and outlet duct (4), comprises a shaped surface not parallel relative to said membrane plane (36)
**characterised in that**
said shaped surface, shaped not in parallel relative to said plane (36), is made with a chute shaped structure (13) and comprises at least two surfaces with different slope (34, 35).

2. A fluid cutoff device (1) according to claim 1, wherein said surface shaped not in parallel is obtained with a chute shaped structure (13).

3. A fluid cutoff device (1) according to any one of the previous claims, wherein said shaped surface comprises at least one leading chute portion (34) and at least one trailing chute portion (35) wherein the passage from said leading chute portion (34) to said trailing chute portion (35) is chamfered and uninterrupted.

4. A fluid cutoff device (1) according to any one of the previous claims, wherein said shaped surface comprises at least one leading chute portion (34) and at least one trailing chute portion (35) wherein the slope of the leading chute portion (34) is smaller than the slope of the trailing chute portion (35).

5. A fluid cutoff device (1) according to claim 4, wherein the trailing chute portion (34) is substantially steeper than the leading chute portion (35).

6. A fluid cutoff device (1) according to any one of the previous claims, wherein said inlet duct (3) is arranged at 180° relative to said outlet duct (4).

7. A fluid cutoff device (1) according to claims 1 to 5, wherein said inlet duct (3) is arranged at 90° relative to said outlet duct (4).

8. A fluid cutoff device (1) according to any one of the previous claims, comprising a static sealing surface (12).

9. A fluid cutoff device (1) according to claim 8, wherein said static sealing surface (12) comprises a surface shaped not in parallel relative to said membrane plane (36).

10. A fluid cutoff device (1) according to claim 9, wherein said static sealing surface (12) has a flared or inversed conical shape.

11. A fluid cutoff device (1) according to any one of the previous claims, wherein said diaphragm (7) comprises undercuts (17) suitable for increasing the bending side thereof.

12. A fluid cutoff device (1) according to any one of the previous claims, wherein said diaphragm (7) comprises an outer rim (8) suitable for being arranged on said static sealing surface (12).

13. A fluid cutoff device (1) according to any one of the previous claims, wherein said rim (8) comprises an increased thickness or projection (19).

14. A fluid cutoff device (1) according to any one of the previous claims, wherein said diaphragm (7) comprises a fluid-dynamic profile end.

15. A fluid cutoff device (1) according to claim 14, wherein said fluid-dynamic profile is a conical profile (16).

16. A fluid cutoff device (1) according to any one of the previous claims, wherein said diaphragm (7) comprises rounded and smooth surfaces.

17. A fluid cutoff device (1) according to any one of the previous claims, comprising actuation means suitable for influencing said diaphragm (7) for allowing the passage from said closed configuration to an open configuration.

18. A fluid cutoff device (1) according to claim 17, wherein said actuation means comprise a valve stem (25).

19. A fluid cutoff device (1) according to claim 17, wherein said actuation means comprise a screw (32) or valve stud.

20. A fluid cutoff device (1) according to claims 1 to 19, comprising a valve lid (38).

21. A fluid cutoff device (1) according to claim 20, wherein said valve lid comprises a signalling through hole (23).

22. A fluid cutoff device (1) according to claim 19, wherein said lid (28) comprises a knob (6).

23. A fluid cutoff device (1) according to claim 22, wherein said knob 6 is suitable for influencing said screw (32) or valve stud.

24. A fluid cutoff device (1) according to claim 22 or 23, wherein said knob (6) is suitable for being manually operated by an external operator.

25. A fluid cutoff device (1) according to claim 24, wherein said knob (6) is suitable for transmitting a torque imparted by said operator to said screw (32) or valve stud.

26. A fluid cutoff device (1) according to any one of claims 20 to 25, wherein said valve lid (38) is made of a metal material, for example AISI 316L steel.

27. A fluid cutoff device (1) according to any one of claims 22 to 26, wherein said knob (6) is made of a metal material, for example AISI 316L steel.

28. A fluid cutoff device (1) according to any one of claims 22 to 26, wherein said knob (6) is made of a polymeric material, for example PTFE.

29. A fluid cutoff device (1) according to any one of the previous claims, wherein said valve body (2) is made of a metal material, for example AISI 316L steel.

30. A system comprising at least one fluid cutoff device (1) according to any one of the previous claims.

31. A system according to claim 30, comprising actuation means suitable for influencing said diaphragm (7) allowing the passage from said closed configuration to an open configuration wherein the fluid flow from the inlet duct (3) to the outlet duct (4) is enabled.

32. A system according to claim 31, wherein said actuation means are manual actuation means.

33. A system according to claim 31, wherein said actuation means are electro-hydraulic actuation means.

34. A system according to claim 31, wherein said actuation means are electro-pneumatic actuation means.

35. A system according to claim 31, wherein said actuation means are electro-mechariical actuation means.

## Patentansprüche

1. Fluidabsperrvorrichtung (1), die einen Ventilkörper (2) umfasst, wobei der Ventilkörper (2) umfasst:
- wenigstens einen Einlasskanal (3), der für die Strömung eines ankommenden Fluids geeignet ist,
- wenigstens einen Auslasskanal (4) in Fluidverbindung mit dem Einlasskanal (3), der zum Befördern des Auslassfluids geeignet ist,
- wenigstens eine Zwischenposition, die geeignet ist, um die Fluidverbindung zu realisieren;
- eine Membran (1), die in dem Ventilkörper (2) sitzt, die geeignet ist, um in einem geschlossenen Aufbau den Fluidstrom von dem Einlasskanal (3) zu dem Auslasskanal (4) zu verhindern, wobei der Fluidstrom von dem Einlasskanal (3) zu dem Auslasskanal (4) über einen Kontaktabschnitt davon, der eine Membranebene (36) definiert, an eine dynamische Dichtungsoberfläche (11) des Einlasskanals (3) anstößt, wobei wenigstens ein innerer Abschnitt der Vorrichtung, der geeignet ist, die Fluidverbindung zwischen dem Einlasskanal (3) und dem Auslasskanal (4) zu realisieren, eine Formoberfläche umfasst, die relativ zu der Membranebene (36) nicht parallel ist,
**dadurch gekennzeichnet, dass** die Formoberfläche, die relativ zu der Ebene (36) nicht parallel geformt ist, mit einer rinnenförmigen Struktur (13) hergestellt ist und wenigstens zwei Oberflächen mit unterschiedlicher Neigung (34, 35) umfasst.

2. Fluidabsperrvorrichtung (1) nach Anspruch 1, wobei die nicht parallel geformte Oberfläche mit einer rinnenförmigen Struktur (13) erhalten wird.

3. Fluidabsperrvorrichtung (1) nach einem der vorangehenden Ansprüche, wobei die Formoberfläche wenigstens einen Leitrinnenabschnitt (34) und wenigstens einen Ablaufrinnenabschnitt (35) umfasst, wobei der Durchgang von dem Leitrinnenabschnitt (34) zu dem Ablaufrinnenabschnitt (35) abgeschrägt und ununterbrochen ist.

4. Fluidabsperrvorrichtung (1) nach einem der vorangehenden Ansprüche, wobei die Formoberfläche wenigstens einen Leitrinnenabschnitt (34) und wenigstens einen Ablaufrinnenabschnitt (35) umfasst, wobei die Neigung des Leitrinnenabschnitts (34) kleiner als die Neigung des Ablaufrinnenabschnitts (35) ist.

5. Fluidabsperrvorrichtung (1) nach Anspruch 4, wobei der Ablaufrinnenabschnitt (34) im Wesentlichen steiler als der Leitrinnenabschnitt (35) ist.

6. Fluidabsperrvorrichtung (1) nach einem der vorangehenden Ansprüche, wobei der Einlasskanal (3) 180° relativ zu dem Auslasskanal (4) angeordnet ist.

7. Fluidabsperrvorrichtung (1) nach den Ansprüchen 1 bis 5, wobei der Einlasskanal (3) 90° relativ zu dem Auslasskanal (4) angeordnet ist.

8. Fluidabsperrvorrichtung (1) nach einem der vorangehenden Ansprüche, die eine statische Dichtungsoberfläche (12) umfasst.

9. Fluidabsperrvorrichtung (1) nach Anspruch 8, wobei die statische Dichtungsoberfläche (12) eine Oberfläche umfasst, die nicht parallel relativ zu der Membranebene (36) geformt ist.

10. Fluidabsperrvorrichtung (1) nach Anspruch 9, wobei die statische Dichtungsoberfläche (12) eine aufgeweitete oder umgekehrte konische Form hat.

11. Fluidabsperrvorrichtung (1) nach einem der vorangehenden Ansprüche, wobei die Membran (7) Unterschneidungen (17) umfasst, die geeignet sind, um ihre Biegeseite zu vergrößern.

12. Fluidabsperrvorrichtung (1) nach einem der vorangehenden Ansprüche, wobei die Membran (7) einen Außenrand (8) umfasst, der geeignet ist, auf der statischen Dichtungsoberfläche (12) angeordnet zu werden.

13. Fluidabsperrvorrichtung (1) nach einem der vorangehenden Ansprüche, wobei der Rand (8) eine erhöhte Dicke oder einen Vorsprung (19) umfasst.

14. Fluidabsperrvorrichtung (1) nach einem der vorangehenden Ansprüche, wobei die Membran (7) ein fluiddynamisches Profilende umfasst.

15. Fluidabsperrvorrichtung (1) nach Anspruch 14, wobei das fluiddynamische Profil ein konisches Profil (16) ist.

16. Fluidabsperrvorrichtung (1) nach einem der vorangehenden Ansprüche, wobei die Membran (7) abgerundete und glatte Oberflächen umfasst.

17. Fluidabsperrvorrichtung (1) nach einem der vorangehenden Ansprüche, die Betätigungsmittel umfasst, welche geeignet sind, um die Membran (7) derart zu beeinflussen, dass der Durchgang von dem geschlossenen Aufbau in einen offenen Aufbau ermöglicht wird.

18. Fluidabsperrvorrichtung (1) nach Anspruch 17, wobei die Betätigungsmittel einen Ventilschaft (25) umfassen.

19. Fluidabsperrvorrichtung (1) nach Anspruch 17, wobei die Betätigungsmittel eine Schraube (32) oder Ventilbolzen umfassen.

20. Fluidabsperrvorrichtung (1) nach den Ansprüchen 1 bis 19, die eine Ventilklappe (28) umfasst.

21. Fluidabsperrvorrichtung (1) nach Anspruch 20, wobei die Ventilklappe ein Signalisierungsdurchgangsloch (23) umfasst.

22. Fluidabsperrvorrichtung (1) nach Anspruch 19, wobei die Klappe (28) einen Knopf (6) umfasst.

23. Fluidabsperrvorrichtung (1) nach Anspruch 22, wobei der Knopf (6) geeignet ist, die Schraube (32) oder den Ventilbolzen zu beeinflussen.

24. Fluidabsperrvorrichtung (1) nach Anspruch 22 oder 29, wobei der Knopf (6) geeignet ist, von einem Bediener von außen manuell bedient zu werden.

25. Fluidabsperrvorrichtung (1) nach Anspruch 24, wobei der Knopf (6) geeignet ist, ein von dem Bediener übermitteltes Drehmoment an die Schraube (32) oder den Ventilbolzen zu übertragen.

26. Fluidabsperrvorrichtung (1) nach einem der Ansprüche 20 bis 25, wobei die Ventilklappe (38) aus einem Metallmaterial, zum Beispiel AISI 316L-Stahl, hergestellt ist.

27. Fluidabsperrvorrichtung (1) nach einem der Ansprüche 22 bis 26, wobei der Knopf (6) aus einem Metallmaterial, zum Beispiel AISI 316L-Stahl, hergestellt ist.

28. Fluidabsperrvorrichtung (1) nach einem der Ansprüche 22 bis 26, wobei der Knopf (6) aus einem Polymermaterial, zum Beispiel PTFE, hergestellt ist.

29. Fluidabsperrvorrichtung (1) nach einem der vorangehenden Ansprüche, wobei der Ventilkörper (2) aus einem Metallmaterial, zum Beispiel AISI 316L-Stahl, hergestellt ist.

30. System, das wenigstens eine Fluidabsperrvorrichtung (1) nach einem der vorangehenden Ansprüche umfasst.

31. System nach Anspruch 30, das Betätigungsmittel umfasst, welche geeignet sind, um die Membran (7) derart zu beeinflussen, dass der Durchgang von dem geschlossenen Aufbau in einen offenen Aufbau ermöglicht wird, in welchem der Fluidstrom von dem Einlasskanal (3) zu dem Auslasskanal (4) freigegeben ist.

32. System nach Anspruch 31, wobei die Betätigungsmittel manuelle Betätigungsmittel sind.

33. System nach Anspruch 31, wobei die Betätigungsmittel elektrohydraulische Betätigungsmittel sind.

34. System nach Anspruch 31, wobei die Betätigungsmittel elektropneumatische Betätigungsmittel sind.

35. System nach Anspruch 31, wobei die Betätigungsmittel elektromechanische Betätigungsmittel sind.

## Revendications

1. Dispositif (1) d'interruption de fluide comprenant un corps (2) de soupape dans lequel ledit corps (2) de soupape comprend :
- au moins un conduit (3) d'entrée permettant l'écoulement d'un fluide entrant ;
- au moins un conduit (4) de sortie, en liaison fluidique avec ledit conduit (3) d'entrée, permettant d'acheminer ledit fluide de sortie ;
- au moins une position intermédiaire permettant de réaliser ladite liaison fluidique ;
- un diaphragme (7) logé dans ledit corps (2) de soupape permettant d'empêcher, dans une configuration fermée, l'écoulement de fluide depuis ledit conduit (3) d'entrée jusqu'audit conduit (4) de sortie, venant buter contre une surface (11) d'étanchéité dynamique du conduit (3) d'entrée via une partie de contact de celle-ci qui définit un plan (36) de membrane ;
dans lequel au moins une partie intérieure dudit dispositif, permettant de réaliser ladite liaison fluidique entre le conduit (3) d'entrée et le conduit (4) de sortie, comprend une surface mise en forme qui n'est pas parallèle audit plan (36) de membrane
**caractérisé en ce que**
ladite surface mise en forme de manière non-parallèle audit plan (36) de membrane est fabriquée avec une structure (13) en forme de goulotte et comprend au moins deux surfaces avec une inclinaison différente (94, 95).

2. Dispositif (1) d'interruption de fluide selon la revendication 1, dans lequel ladite surface mise en forme de manière non-parallèle est obtenue avec une structure (13) en forme de goulotte.

3. Dispositif (1) d'interruption de fluide selon l'une des revendications précédentes, dans lequel ladite surface mise en forme comprend au moins une partie avant (34) de goulotte et au moins une partie arrière (35) de goulotte dans lequel le passage depuis ladite partie avant (34) de goulotte jusqu'à ladite partie arrière (35) de goulotte est biseauté et ininterrompu.

4. Dispositif (1) d'interruption de fluide selon l'une des revendications précédentes, dans lequel ladite surface mise en forme comprend au moins une partie avant (34) de goulotte et au moins une partie arrière (35) de goulotte dans lequel l'inclinaison de la partie avant (34) de goulotte est inférieure à celle de la partie arrière (35) de goulotte.

5. Dispositif (1) d'interruption de fluide selon la revendication 4, dans lequel la partie arrière (34) de goulotte est sensiblement plus abrupte que la partie avant (35) de goulotte.

6. Dispositif (1) d'interruption de fluide selon l'une des revendications précédentes, dans lequel ledit conduit (3) d'entrée est disposé à 180° C par rapport audit conduit (4) de sortie.

7. Dispositif (1) d'interruption de fluide selon l'une des revendications 1 à 5, dans lequel ledit conduit (3) d'entrée est disposé à 90° C par rapport audit conduit (4) de sortie.

8. Dispositif (1) d'interruption de fluide selon l'une des revendications précédentes, comprenant une surface (12) d'étanchéité statique.

9. Dispositif (1) d'interruption de fluide selon la revendication 8, dans lequel ladite surface (12) d'étanchéité statique comprend une surface mise en forme de manière non-parallèle audit plan (36) de membrane.

10. Dispositif (1) d'interruption de fluide selon la revendication 9, dans lequel ladite surface (12) d'étanchéité statique possède une forme conique évasée ou inversée.

11. Dispositif (1) d'interruption de fluide selon l'une des revendications précédentes, dans lequel ledit diaphragme (7) comprend des encoches (17) permettant d'augmenter le côté courbé de celui-ci.

12. Dispositif (1) d'interruption de fluide selon l'une des revendications précédentes, dans lequel ledit diaphragme (7) comprend un rebord extérieur (8) pouvant être disposé sur ladite surface (12) d'étanchéité statique.

13. Dispositif (1) d'interruption de fluide selon l'une des revendications précédentes, dans lequel ledit rebord (8) comprend une projection (19) ou une épaisseur accrue.

14. Dispositif (1) d'interruption de fluide selon l'une des revendications précédentes, dans lequel ledit diaphragme (7) comprend une extrémité de profil de dynamique des fluides.

15. Dispositif (1) d'interruption de fluide selon la revendication 14, dans lequel ledit profil de dynamique des fluides est un profil conique (16).

16. Dispositif (1) d'interruption de fluide selon l'une des revendications précédentes, dans lequel ledit diaphragme (7) comprend des surfaces arrondies et lisses.

17. Dispositif (1) d'interruption de fluide selon l'une des revendications précédentes, comprenant des moyens d'actionnement permettant d'influer sur ledit diaphragme (7) et permettant le passage de ladite configuration fermée à une configuration ouverte.

18. Dispositif (1) d'interruption de fluide selon la revendication 17, dans lequel lesdits moyens d'actionnement comprennent une tige (25) de soupape.

19. Dispositif (1) d'interruption de fluide selon la revendication 17, dans lequel lesdits moyens d'actionnement comprennent une vis (32) ou une goupille de soupape.

20. Dispositif (1) d'interruption de fluide selon l'une des revendications 1 à 19, comprenant un clapet (38) de soupape.

21. Dispositif (1) d'interruption de fluide selon la revendication 20, dans lequel ledit clapet de soupape comprend un trou traversant (23) de signalisation.

22. Dispositif (1) d'interruption de fluide selon la revendication 19, dans lequel ledit clapet (28) comprend un bouton (6).

23. Dispositif (1) d'interruption de fluide selon la revendication 22, dans lequel ledit bouton (6) permet d'influer sur ladite vis (32) ou sur ladite goupille de soupape.

24. Dispositif (1) d'interruption de fluide selon la revendication 22 ou 23, dans lequel ledit bouton (6) peut être actionné manuellement par un opérateur extérieur.

25. Dispositif (1) d'interruption de fluide selon la revendication 24, dans lequel ledit bouton (6) permet de transmettre un couple communiqué par ledit opérateur à ladite vis (32) ou à ladite goupille de soupape.

26. Dispositif (1) d'interruption de fluide selon l'une des revendications 20 à 25, dans lequel ledit clapet (38) de soupape est composé d'un matériau métallique, par exemple de l'acier AISI 316L.

27. Dispositif (1) d'interruption de fluide selon l'une des revendications 22 à 26, dans lequel ledit bouton (6) est composé d'un matériau métallique, par exemple de l'acier AISI 316L.

28. Dispositif (1) d'interruption de fluide selon l'une des revendications 22 à 26, dans lequel ledit bouton (6) est composé d'un matériau polymère, par exemple du PTFE.

29. Dispositif (1) d'interruption de fluide selon l'une des revendications précédentes, dans lequel ledit corps (2) de soupape est composé d'un matériau métallique, par exemple de l'acier AISI 316L.

30. Système comprenant au moins un dispositif (1) d'interruption de fluide selon l'une des revendications précédentes.

31. Système selon la revendication 30, comprenant des moyens d'actionnement aptes à influer sur ledit diaphragme (7), et permettant le passage de ladite configuration fermée à une configuration ouverte dans laquelle l'écoulement de fluide depuis le conduit (3) d'entrée jusqu'au conduit (4) de sortie est possible.

32. Système selon la revendication 31, dans lequel lesdits moyens d'actionnement sont des moyens d'actionnement manuels.

33. Système selon la revendication 31, dans lequel lesdits moyens d'actionnement sont des moyens d'actionnement électro-hydrauliques.

34. Système selon la revendication 31, dans lequel lesdits moyens d'actionnement sont des moyens d'actionnement électro-pneumatiques.

35. Système selon la revendication 31, dans lequel lesdits moyens d'actionnement sont des moyens d'actionnement électro-mécaniques.
